# EUROPEAN PATENT APPLICATION

(11) **EP 1 690 706 A1**
(43) Date of publication of application: **16.08.2006**
(21) Application number: 04820624.7
(22) Date of filing: 06.12.2004
(51) Int. Cl.: B60H 1/00

(54) **AIR CONDITIONER CONTROL DEVICE AND AIR CONDITIONER CONTROL METHOD**

(30) Priority: 05.12.2003 JP 2003406770
(71) Applicant: Kabushiki Kaisha Kenwood, Hachiouji-shi, Tokyo 192-8525 (JP)
(72) Inventor: KOYAMA, Rika, Kobe-shi,Hyogo 657-0033 (JP)
(74) Representative: Rüger, Barthelt & Abel Patentanwälte
(86) International application number: PCT/IB2004/004002
(87) International publication number: WO 2005/061249

(57) **Abstract**

A language analyzer (2) performs speech recognition on a speech input by a speech input unit (1), specifies a possible word which is represented by the speech, and the score thereof and supplies word data representing them to an agent processing unit (6). The agent processing unit (6) stores process item data which defines a data acquisition process to acquire word data or the like, a discrimination process, and an input/output process, and wires or data defining transition from one process to another and giving a transition constant to the transition, and executes a flow represented generally by the process item data and the wires, thereby controlling devices belonging to an input/output target device group (5). To which process in the flow the transition takes place is determined by the weighting factor of each wire, which is determined by the connection relationship between a point where the process has proceeded and the wire, and the score of word data

## Description

### Technical Field

The present invention relates to an air conditioner control device and an air conditioner control method.

### Background Art

Recently, a scheme of recognizing speeches using a speech recognition technology, and controlling electric devices or the like in response to the recognition result is used. Specifically, the scheme identifies a word represented by the input speech, discriminates whether the identified word matches with a predetermined keyword or not, and controls an external device based on the discrimination result. Such a scheme is used for controlling an airditioner or the like (see, for example, Patent Literature 1 and Patent Literature 2).
Patent Literature 1: Unexamined Japanese Patent Application KOKAI Publication No. H4-324312
Patent Literature 2: Unexamined Japanese Patent Application KOKAI Publication No. 2000-383809

### Disclosure of Invention

### Problem to be Solved by the Invention

It is however difficult to completely recognize an instruction aurally uttered in the form of a language by a human being. Accordingly, there is a case where the scheme cannot adequately respond to an instruction uttered in the form of a language by a human being.

The present invention has been made in view of the above situation, and it is an object of the invention to provide an air conditioner control device and an air conditioner control method which can control a device adequately in response to an instruction uttered in the form of a language by a human being.

### Means for Solving the Problem

To achieve the object, an air conditioner control device according to the first aspect of the invention is
an air conditioner control device (6) which controls an air conditioner (51) in accordance with a speech-based instruction, comprises:
means (6) which detects an operational status of an external device (5) including the air conditioner (51) in response to input of the speech-based instruction; and
means (6) which controls not only the air conditioner (51) but also devices (52, 53, 54, and 55) other than the air conditioner device in such a way that a condition desired by an utterer of the speech is obtained based on an operational status detected by the operational status detection means.

An air conditioner control device according to the second aspect of the invention is
an air conditioner control device (6) which controls an air conditioner (51) in accordance with a speech-based instruction, comprises:
means (6) which detects operational statuses of the air conditioner (51) and a window in response to input of the speech-based instruction; and
means (6) which controls not only the air conditioner (51) but also an operation of closing the window in such a way that a condition desired by an utterer of the speech is obtained when an operational status detected by the operational status detection means indicates that the window is open.

An air conditioner control device according to the third aspect of the invention comprises:
speech recognition means (2) which acquires speech data representing a speech, and specifies a candidate of a phrase represented by the speech by performing speech recognition on the speech data; and
air conditioner control means (6) which specifies a variable to be changed for obtaining a condition desired by an utterer of the speech and/or a direction in which the variable should change, based on a candidate specified by the speech recognition means (2), environmental data indicating a condition of an environment under which a conditioning by an external air conditioner (51) is performed and/or operational status data indicating an operational status of the air conditioner (51), and controls the air conditioner (51) in such a way that a specified variable changes in a specified direction.

The air conditioner control means further controls devices (52, 53, 54, and 55) other than the air conditioner (51),
specifies a device (5) to be controlled to change a variable to be changed for obtaining a condition desired by an utterer of the speech based on a candidate specified by the speech recognition means (2), the environmental data, and/or the operational status data, and controls a specified device (5) in such a way that a specified variable changes in a specified direction.

The air conditioner control means may have:
means (6) which discriminates whether or not the utterer of the speech feels comfortable with a current condition based on a candidate specified by the speech recognition means (2), and stores a condition indicated by environmental data to be supplied at a time when it is discriminated that the utterer feels comfortable; and
means (6) which discriminates whether or not the utterer of the speech desires to obtain a condition with which the utterer felt comfortable in the past based on a candidate specified by the speech recognition means (2), and upon determination that the utterer desires, refers locally stored past environmental data, specifies a variable to be changed for obtaining a condition indicated by the referred past environmental data and/or a direction in which the variable should change, and controls the air conditioner (51) in such a way that a specified variable changes in a specified direction.

An air conditioning device according to the fourth aspect of the invention comprises:
air conditioner control means (6) which specifies a variable to be changed to obtain a desired condition and/or a direction in which the variable should change, and controls an external device (5) including an air conditioner (51) in such a way that a specified variable changes in a specified direction; and
simulation means (6) which executes a simulation regarding a shift of a condition under a control being executed by the air conditioner control means (6),
wherein the air conditioner control means (6) discriminates whether a conditioning method should be changed or not based on a result of the simulation and environmental data indicating a condition of an environment under which a conditioning by the air conditioner (51) is performed, and upon discrimination that it should be changed, outputs a message urging a change of the conditioning method or changes a mode of a control of the device (5).

An air conditioner control method according to the fifth aspect of the invention is
an air conditioner control method of an air conditioner control device (6) which controls an air conditioner (51) in accordance with a speech-based instruction, comprises:
a step of detecting an operational status of an external device (5) including the air conditioner (51) in response to input of the speech-based instruction; and
a step of controlling devices (52, 53, 54, and 55) other than the air conditioner device as well as the air conditioner (51) in such a way that a condition desired by an utterer of the speech is obtained based on an operational status detected by the operational status detection means.

An air conditioner control method according to the sixth aspect of the invention comprises:
a speech recognition step of acquiring speech data representing a speech, and specifying a candidate of a phrase represented by the speech by performing speech recognition on the speech data; and
an air conditioner control step of specifying a variable to be changed for obtaining a condition desired by an utterer of the speech and/or a direction in which the variable should change, based on a candidate specified by the speech recognition step, environmental data indicating a condition of an environment under which a conditioning by an external air conditioner (51) is performed and/or operational status data indicating an operational status of the air conditioner (51), and controlling the air conditioner (51) in such a way that a specified variable changes in a specified direction.

An air conditioner control method according to the seventh aspect of the invention comprises:
an air conditioner control step of specifying a variable to be changed to obtain a desired condition and/or a direction in which the variable should change, and controlling an external device (5) including an air conditioner (51) in such a way that a specified variable changes in a specified direction; and
a simulation step of executing a simulation regarding a shift of a condition under a control being executed by the air conditioner control means,
wherein in the air conditioner control step, it is discriminated whether a conditioning method should be changed or not based on a result of the simulation and environmental data indicating a condition of an environment under which a conditioning by the air conditioner (51) is performed, and when it is discriminated that the conditioning method should be changed, a message urging a change of the conditioning method is output, or a mode of a control of the device (5) is changed

### Effect of the Invention

The present invention realizes an air conditioner control device and an air conditioner control method which can control a device adequately in response to an instruction uttered in the form of a language by a human being.

### Brief Description of Drawings

[FIG. 1] A diagram showing a vehicular air conditioning system according to an embodiment of the present invention.
[FIG. 2] A more detailed structural diagram of the vehicular air conditioning system according to the embodiment.
[FIG. 3] A diagram exemplarily showing a specific example of grouping flags.
[FIG. 4] A diagram for explaining a trigger acquisition process.
[FIG. 5] A diagram for explaining a discrimination process.
[FIG. 6] A diagram for explaining a discrimination process with an inquiry.
[FIG. 7] A diagram for explaining an input/output process.
[FIG. 8] A diagram showing wires.
[FIG. 9] A diagram showing a part of a flow represented generally by a process item database and a wire database.
[FIG. 10] A diagram showing a continuation of the flow in FIG. 9.
[FIG. 11] A diagram showing another part of the flow represented generally by the process item database and the wire database.
[FIG. 12] FIG.12A and B are diagrams respectively showing other parts of the flow represented generally by the process item database and the wire database.
[FIG. 13] A diagram for explaining setting of a weighting factor.
[FIG. 14] A flowchart for explaining the operation of an agent processing unit.

### Explanation of Reference Numerals

1 speech input unit
2 language analyzer
3 speech synthesis processing unit
4 speech output unit
5 input/output target device group
51 air conditioner
52 window opening/closing controller
53 temperature sensor
54 humidity sensor
55 clock
6 agent processing unit

### Best Mode for Carrying Out the Invention

An embodiment of the present invention will be explained below, taking a vehicular air conditioning system provided in a vehicle as an example, by referring to the accompanying drawings. According to the invention, the vehicular air conditioning system can function as an agent device which transitions a status in accordance with input information, and carries out a process. A part of the vehicular air conditioning system functions as a speech recognition device.

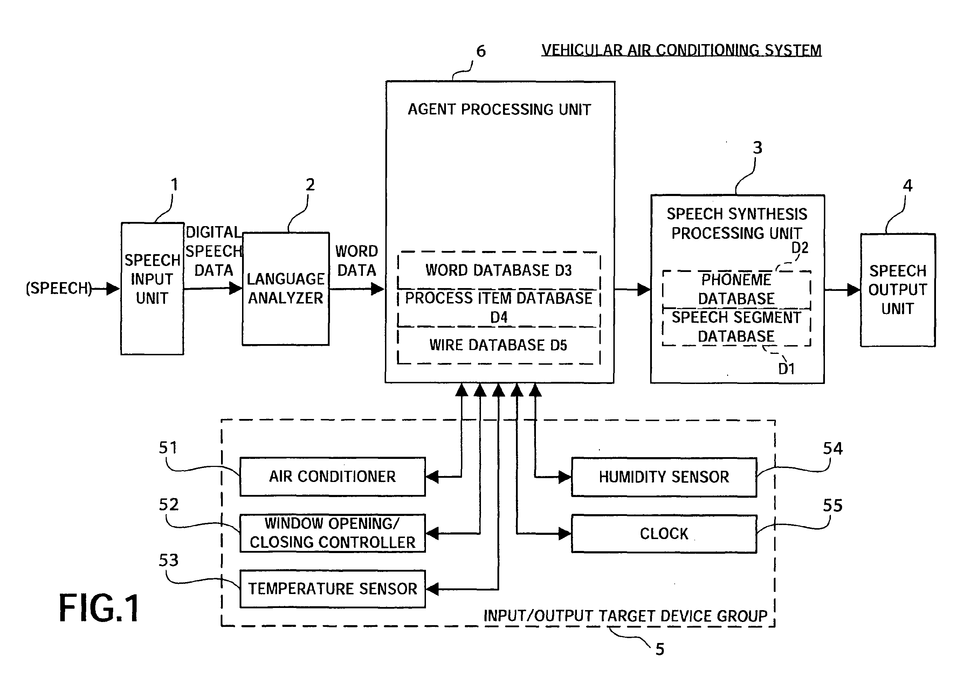

FIG. 1 is a block diagram showing the structure of the vehicular air conditioning system. As shown in the figure, the vehicular air conditioning system comprises a speech input unit 1, a language analyzer 2, a speech synthesis processing unit 3, a speech output unit 4, an input/output target device group 5, and an agent processing unit 6. The speech input unit 1 and the language analyzer 2 are connected together, and the speech synthesis processing unit 3 and the speech output unit 4 are connected together, and, the language analyzer 2, the speech synthesis processing unit 3, and the input/output device group 5 are connected to the agent processing unit 6 through exclusive cables or a LAN (Local Area Network).

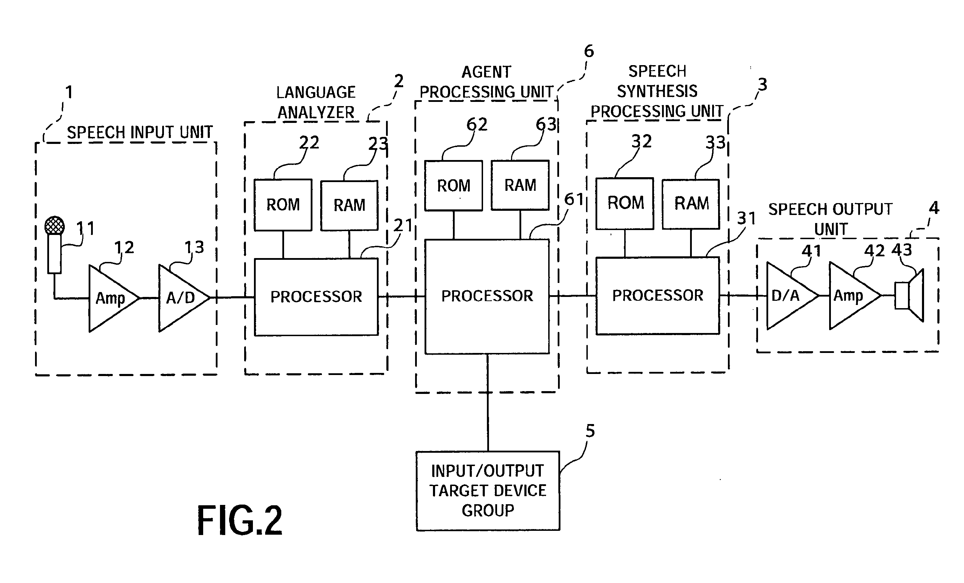

The speech input unit 1 inputs a speech, generates speech data of a digital form from the input speech, and supplies the speech data to the language analyzer 2. Specifically, the speech input unit 1 comprises, for example, a microphone 11, an AF (Audio Frequency) amplifier 12, and an A/D (Analog-to-Digital) converter 13 incorporating a sample and hold circuit as shown in FIG 2. The microphone 11 converts a speech to a speech signal, and outputs the signal. The AF amplifier 12 amplifies the speech signal from the microphone 11, and outputs the signal. The A/D converter 13 performs sampling and A/D conversion of the amplified speech signal from the AF amplifier 12, generates digital speech data, and supplies the data to the language analyzer 2.

As shown in FIG 2, each of the language analyzer 2, the speech synthesis processing unit 3 and the agent processing unit 6 comprises a processor 21, 31, 61 comprising, for example, a CPU (Central Processing Unit), a non-volatile memory 22, 32, 62, such as a hard disk drive, which stores a program to be run by the processor 21, 31, 61, and a volatile memory 23, 33, 63, such as a RAM (Random Access Memory), which has a memory area to be a work area for the processor.
A part or all of the functions of the language analyzer 2, the speech synthesis processing unit 3, and the agent processing unit 6 may be achieved by a single processor, or a single non-volatile memory and a single volatile memory.

The language analyzer 2 performs a speech recognition process on speech data supplied from the speech input unit 1.
Through the speech recognition process, the language analyzer 2 specifies a candidate for a word represented by the speech data, and the likelihood (score) S of the candidate. A word whose score S has a lower value than a predetermined value is not selected as a candidate. The scheme for speech recognition is arbitrary, and a plurality of candidates may be specified. Data indicating a specified candidate and the score S of the candidate (hereinafter, called word data) is generated, and supplied to the agent processing unit 6. The word data may include word information itself and a score S, but in practice, there is an advantage of dealing the word data if the word data includes a word ID and a score S

The non-volatile memory 32 of the speech synthesis processing unit 3 stores a speech segment database D1 which stores data representing waveforms of words, and a phoneme database D2 which stores data representing waveforms constituting phonemes.
The speech segment database D1 stores data representing waveforms of words. The phoneme database D2 stores speech segment data representing waveforms constituting phonemes. The speech synthesis processing unit 3 generates digital speech data representing a speech which reads out text data supplied from the agent processing unit 6 by using the data stored in the speech segment database D1 and/or the phoneme database D2.
The speech synthesis processing unit 3 supplies the generated speech data to the speech output unit 4.
The scheme of generating digital speech data is arbitrary; for example, slot filling method and rule-based synthesis (Rule-based synthesis) can be used. The slot filling method is a method by which, for example, word-by-word speeches are read by an announcer, and are linked together and output. The rule-based synthesis is a method by which relatively small units, such as phonemes (consonants or vowels) or kana, are linked together and output.

The speech output unit 4 reproduces a speech represented by digital speech data supplied from the speech synthesis processing unit 3. More specifically, the speech output unit 4 has a D/A (Digital-to-Analog) converter 41, an AF amplifier 42, and a speaker 43 as shown in FIG 2.
The D/A converter 41 performs D/A conversion on the digital speech data supplied from the speech synthesis processing unit 3 to convert the data to an analog speech signal. The AF amplifier 42 amplifies the analog speech signal. The speaker 43 vibrates in accordance with the analog speech signal, and reproduces and outputs a speech represented by the analog speech data.

The input/output target device group 5 includes, for example, an air conditioner 51, a window opening/closing controller 52, a temperature sensor 53, a humidity sensor 54, and a clock 55.

The air conditioner 51 performs a cooling, a heating or a fanning operation in accordance with a control signal supplied to the air conditioner. The air conditioner 51 generates and outputs data representing its operational status, e.g., data indicating in which one of statuses, a cooling operation, a heating operation, temperature adjustment to a set temperature, a fanning operation, and at rest, the air conditioner is. The air conditioner 51 generates and outputs data representing a setting status, e.g., data indicating a current set temperature.

The window opening/closing controller 52 includes a motor, a control circuit that controls rotation and stopping of the motor according to a control signal, a winch that moves a window opening/closing control frame, and the like, and opens or closes a window according to a control signal supplied to that controller. The control circuit of the window opening/closing controller 52 generates and outputs data representing an operational status of the window opening/closing controller 52, e.g., data indicating the opened amount of the window to be opened/closed.

The temperature sensor 53 continuously generates data indicating a current temperature in the vehicle, and supplies it to the agent processing unit 6.
The humidity sensor 54 continuously generates data indicating a current humidity in the vehicle, and supplies it to the agent processing unit 6.
The clock 55 comprises, for example, a crystal oscillator, a counter circuit, and the like, continuously generates data indicating a current time, and supplies it to the agent processing unit 6. In a case where the agent processing unit 6 is connected to a navigation device, time information obtained from a GPS may be used.[0027]
The non-volatile memory 62 of the agent processing unit 6 stores a word database D3. The word database D3 stores data of a plurality of words and one or more flags for word grouping indicating a plurality of word groupings in association with one another.

Individual flags associated with a single word are associated with concepts different from one another. When a flag represents a predetermined value (hereinafter, let the value be " 1"), it indicates that a word associated with the flag is grouped under a concept associated with the flag. When the flag represents another value (for example, "0"), it indicates that the word is not grouped under the concept.

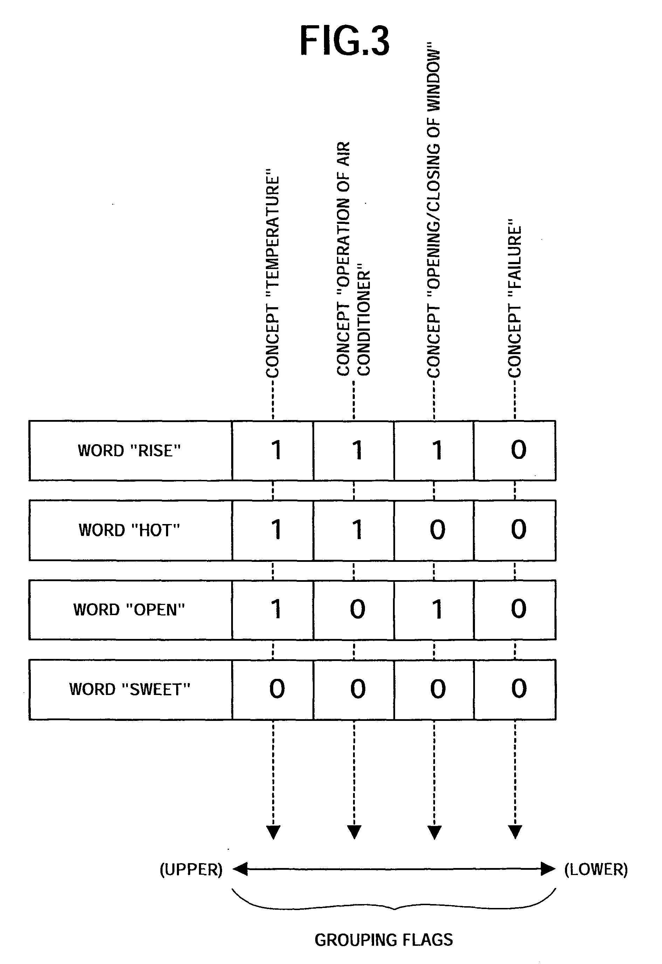

FIG 3 is a diagram exemplarily showing a specific example of grouping flags.
In the example of FIG. 3, word grouping flags of four bits are associated with each of words "rise", "hot" and "open".
The most significant bit (MSB) flag in the 4-bit bit group is associated with a concept "temperature". The second bit flag from the MSB is associated with a concept "operation of air conditioner". The third bit flag from the MSB is associated with a concept "opening/closing of window". The least significant bit flag is associated with a concept "failure". As illustrated in the figure, the value of the 4-bit flags associated with the word "rise" is a binary number "1110",the value of the flags associated with the word "hot" is a binary number "1100", and the value of the flags associated with the word "open" is a binary number "1010".
In this case, the flags indicate that the words "rise", "hot" and "open" are grouped under the concept "temperature", the words "rise" and "hot" are grouped under the concept "operation of air conditioner", the words "hot" and "open" are grouped under the concept "opening/closing of window", and none of the words "rise", "hot" and "open" are grouped under the concept "failure". Of course, increasing the number of bits can indicate the association with a greater number of concepts.
The individual words and the individual concepts are used as "discrimination conditions" for individual process items stored in a process item database D4.

The non-volatile memory of the agent processing unit 6 further stores the process item database and a wire database.

The process item database D4 is a database storing data (process item data) which describes the contents of a trigger acquisition process (TGxx), a discrimination process (Cnxx or QBxx), and an input/output process (EXxx to be discussed later), which are to be executed by the agent processing unit 6, process item (pointer) by process item. Note that "xx" is an identification number.

Of the process items stored in the process item database D4, data describing the contents of the "trigger acquisition process (TGxx)" includes trigger data (data designating the contents of data to be acquired as a trigger) which specifies a trigger to start those processes and a transition constant, to be discussed later, for determining the progress direction (a constant which indicates the degree of transition in the progress direction and becomes a calculation standard for a weighting factor J to be described later).
Trigger data is arbitrary, and is, for example, data indicating in which one of the statuses, a cooling operation, a heating operation, temperature adjustment to a set temperature, a fanning operation, and at rest, the air conditioner is, data indicating the opened amount of a window open, data indicating the temperature in a room, or the aforementioned word data supplied from the language analyzer 2. Alternatively, trigger data may be data which is given from the process that the agent processing unit 6 itself executes. When trigger data(data which is acquired in the trigger acquisition process) is word data, it may be data indicating the "concept" that is assigned to the group to which a word represented by the word data belongs. It is to be noted that, as will be discussed later, the contents of the trigger acquisition process are described in such a way that a plurality of trigger acquisition processes do not acquire word data representing the same word.

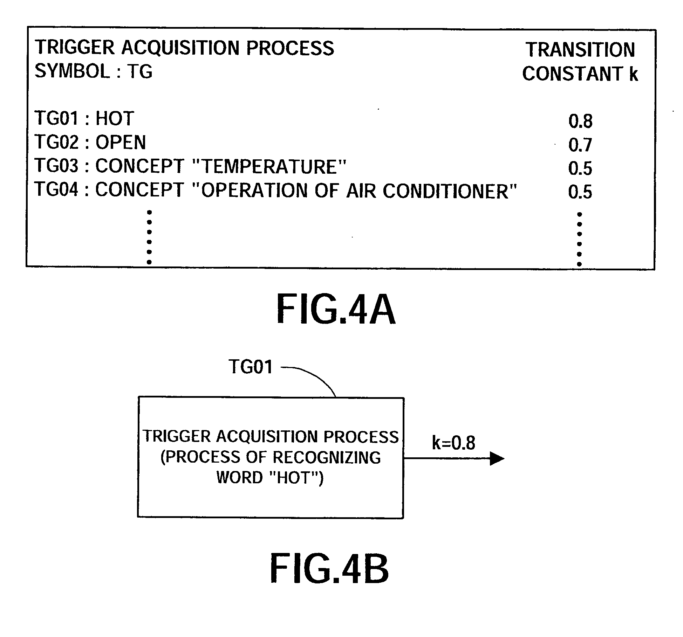

FIG 4A shows an example of a trigger acquisition process TGxx. In this example, a trigger TG01 is a process of acquiring the concept "hot" as a trigger (identifying the word (in the example in FIG. 3, word "temperature" or "operation of air conditioner") grouped to the word "hot"), and the transition constant k for determining whether or not to proceed (transition) to a process following that process is 0.8. FIG. 4B illustrates a flowchart for a trigger acquisition process TG01.
A trigger acquisition process TG02 is a process of acquiring the word "open". A trigger acquisition process TG03 is a process of acquiring a word belonging to a group associated with the concept "temperature" (acquiring one of "rise", "hot" and "open" in FIG. 3). TG04 is a process of acquiring a word belonging to a group associated with the concept "operation of air conditioner" (acquiring either "rise" or "hot" in FIG. 3).

Data describing the contents of a "discrimination process (Cnxx)" stored in the process item database D4 includes data describing a discrimination condition, a list of possible results as discrimination results, and a transition constant k in a return direction to be discussed later for each discrimination process. The data describing the contents of the discrimination processes includes data which describes a transition constant k for determining the progress direction for each discrimination result.

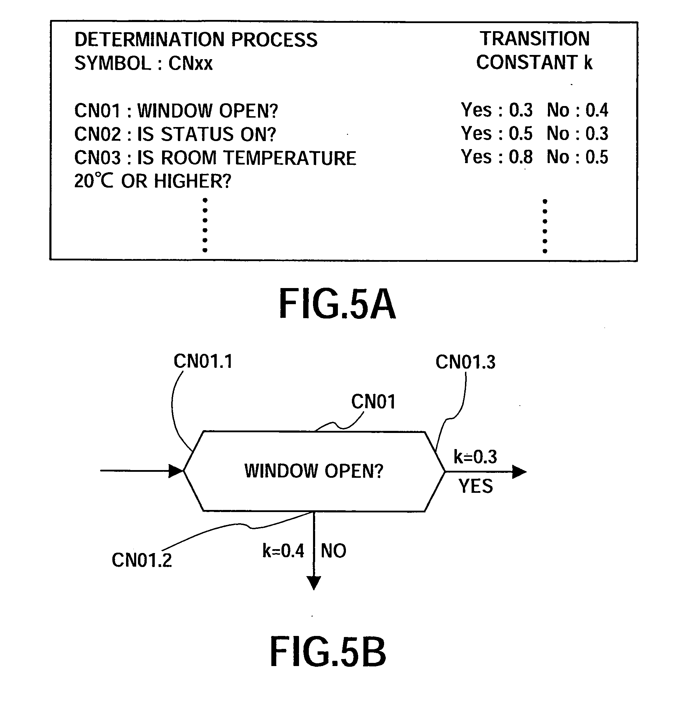

FIG 5A shows an example of a discrimination process CNxx. In this example, a discrimination process CN01 is a "process of discriminating whether a window is open or not", and the transition constant k for determining whether or not to proceed to a following process when it is discriminated as open is 0.5, while the transition constant k for determining whether or not to proceed to a following process when it is not discriminated as open is 0.5. FIG 5B illustrates a flowchart for this example. A node CN01.1 shown in FIG. 5B is a start node indicating the start point of the process, a node CN01.2 is a node in the progress direction when it is discriminated that a window is closed, and the transition constant k is 0.4. Further, a node CN01.3 is a node in the progress direction when it is discriminated that a window is open, and the transition constant k is 0.3. A discrimination process CN02 is a process of discriminating whether the status of the air conditioner 51 is on (in operation) or not, and the transition constant k for determining whether or not to proceed to a following process when it is discriminated as being in operation is 0.5, while the transition constant k when it is not discriminated as being off (not operating) is 0.3.

In the "discrimination process", data to be used in discrimination may be acquired from an arbitrary acquisition source. Possible acquisition sources include, for example, other processes to be executed by the language analyzer 2 and the agent processing unit 6, devices belonging to the input/output target device group 5, and other external devices. In this case, data which describes the contents of the discrimination process may further include, for example, data specifying an acquisition source for data to be used in discrimination.

In the "discrimination process", predetermined data may be output to a predetermined output destination prior to discrimination (in which case, a symbol indicating the process is, for example, QBxx). For example, sending data representing a predetermined inquiry to the speech synthesis processing unit 3 prior to discrimination, or the like is possible. In a case where predetermined data is output in the discrimination process prior to discrimination, data which describes the contents of the discrimination process includes, for example, the contents of data to be output and data designating the output destination of the data.

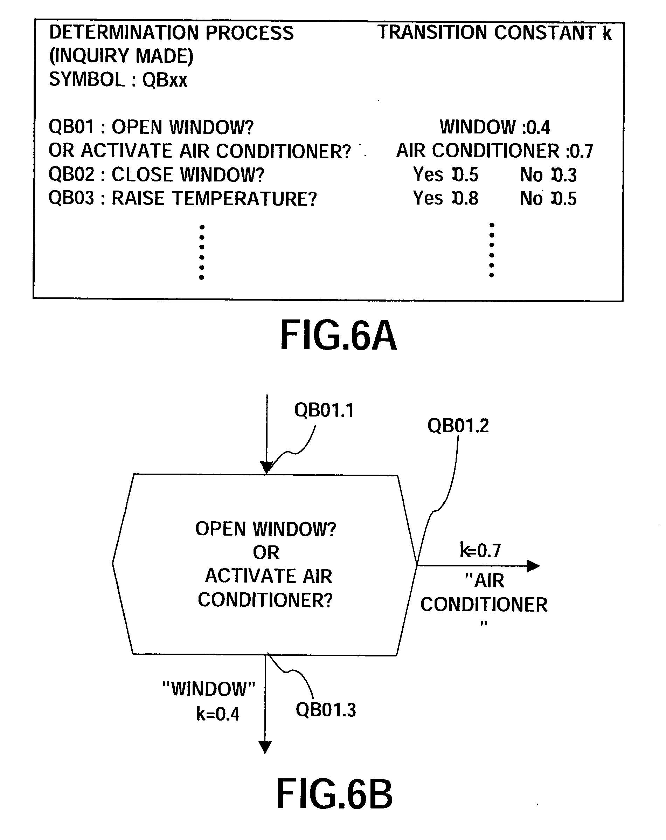

FIG 6A shows an example of a discrimination process QBxx. In this example, a discrimination process QB01, for example, asks a user "Open a window? Or activate the air conditioner?", and the transition constant k in the progress direction when the response (the user's answer) is "Activate the air conditioner" is 0.7, and the transition constant k in the progress direction when the response is "open a window" is 0.4. FIG. 6B illustrates a flowchart for this example. A node QB01.1 shown in FIG. 6B is a start node indicating the start point of the process, a node QB01.2 is a node in the progress direction when it is discriminated that activation of the "air conditioner" is designated in response to the inquiry, and the transition constant k is 0.7. Further, a node QB01.3 is a node in the progress direction when it is discriminated that opening a window is designated, and the transition constant k is 0.4. A discrimination process QB02 asks the user "Close a window?", the transition constant k in the progress direction when the response (the user's answer) is "Close" is 0.5, and a weighting factor k in the progress direction when the response is "Do not close" is 0.3.

Data describing the contents of an "input/output process" stored in the process item database D4 comprises data which designates the contents of data to be input or output. Input data and output data may have arbitrary contents. For example, output data may be data representing reading of a speech which is generated by the speech output unit 4 via the speech synthesis processing unit 3 or a control signal which controls an external device. Input data may be, for example, data to be supplied from an external device.

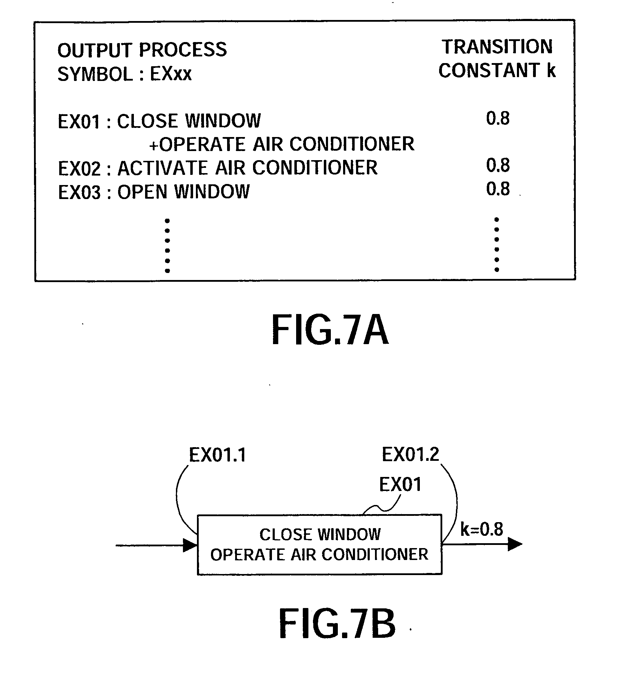

FIG. 7A shows an example of an input/output process EXxx. In this example, an output process EX01, for example, is an operation to "Close a window, and activate the air conditioner", and the transition constant k in the progress direction of executing a process after activation is 0.8. FIG. 7B illustrates a flowchart for this example. A node EX01.1 shown in FIG 7B is a start node indicating the start point of the process, a node EX01.2 is a node indicating the end of the process, and the transition constant k is 0.8. With regard to an output process EXxx, selection of a node indicating the end of the process without performing, for example, setting of a transition constant k may be a necessary process.

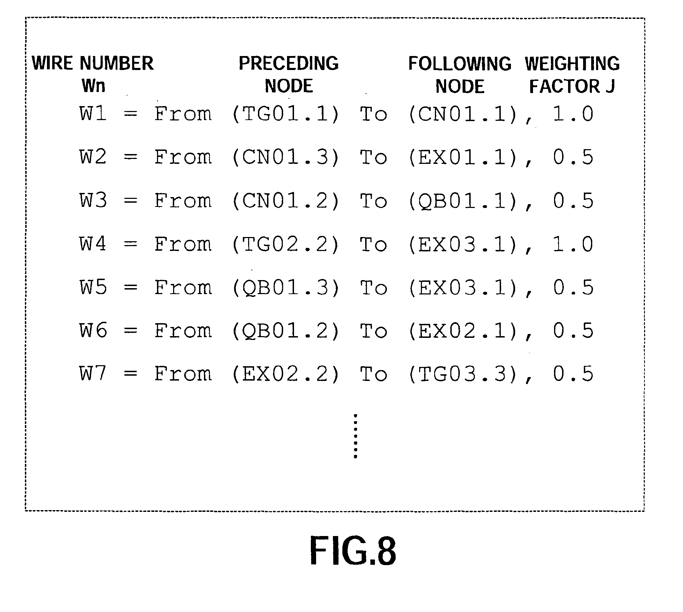

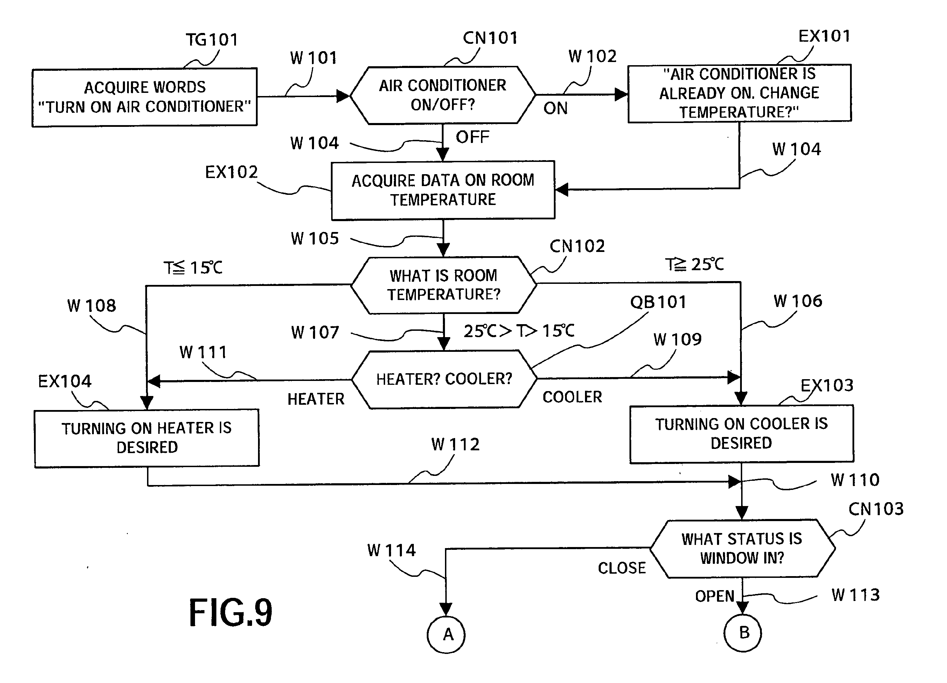

The wire database D5 comprises a set of data describing transitions among a plurality of processes (TG, CNxx, QBxx, EXxx) (the transition definition data will be hereinafter called wires). A wire comprises data described in, for example, a format illustrated in FIG. 8. As illustrated, a wire Wn (W1, W2...) is data which designates a preceding process (X), a following process (Y), and a weighting factor J given to transition, for the transition (From (X) To (Y)) from the preceding process X (From (X)) to the following process Y (To(Y)). When the preceding process X is a discrimination process, it is necessary to describe transition from what discrimination result of the discrimination process.
A transition causing process X and a transition target Y are specified by the node number of each process.
The weighting factor J of each wire is not a fixed value, but is appropriately calculated and set according to the progress of a process. Calculation of the weighting factor J of the wire will be discussed later with reference to FIG. 9.

A flow generally represented by the process item database D4 and the wire database D5 is executed. The process item database D4 and the wire database D5 can describe a flow illustrated in FIGS. 9 to 12 as a whole based on examples of FIGS. 3 to 8.

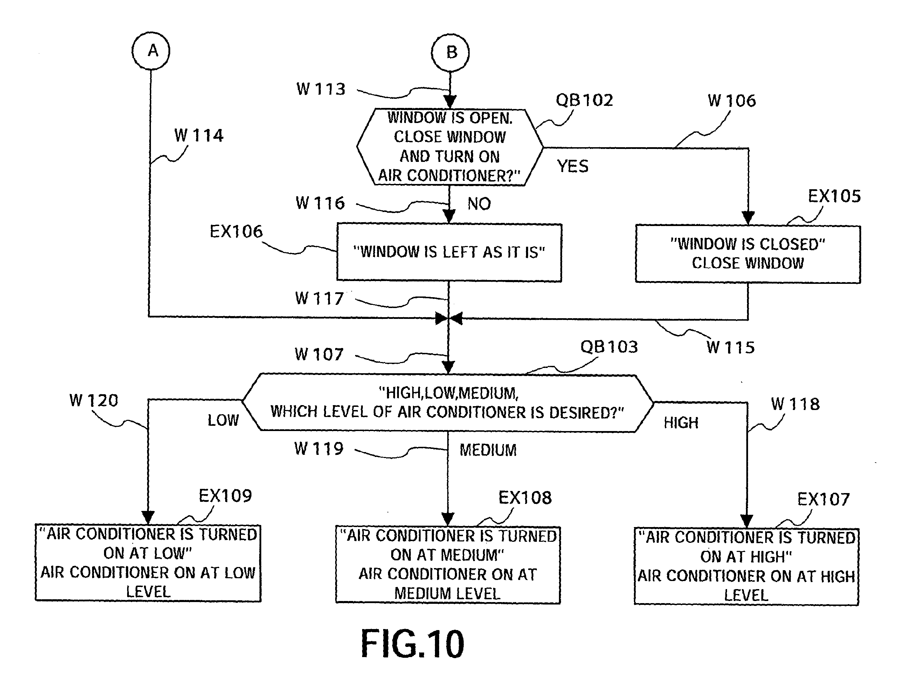

In the flow illustrated in FIGS. 9 and 10, the agent processing unit 6 stands by for word data representing words designating turning ON of the air conditioner like "turn on an air conditioner" to be supplied from the language analyzer 2 in trigger process step TG01, and when the word data is supplied, this data is acquired and given to a discrimination process step CN101 (wire W101). A discrimination result of speech recognition may be improved with the score S of the word data representing the words "turn on an air conditioner" and the aforementioned weighting factor J, which will be discussed later.

In the discrimination process step CN101, the agent processing unit 6 acquires data representing whether the air conditioner 51 is in operation or not from the air conditioner 51, and a process proceeds to input/output process step EX101 when having discriminated that it is in operation (wire W102). In the input/output process step EX101, data representing a text "air conditioner is already in operation. Change temperature?" is supplied to a speech synthesis processing unit 3, and the agent processing unit 6 shifts the process to input/output process step EX102 (wire W103). The speech output unit 4 reproduces a speech which reads out a text represented by the data supplied in the input/output process step EX101.

When it is discriminated in the discrimination process step CN101 that the air conditioner 51 is not in operation, the agent processing unit 3 shifts the process to the input/output process step EX102 (wire W104).

The agent processing unit 6 acquires data indicating a current temperature in the room of the vehicle from the temperature sensor 53 at the input/output process EX102, and shifts the process to a discrimination process CN102 (wire W105). In the discrimination process step CN102, the agent processing unit 6 discriminates which one of (a) greater than or equal to 25 °C, (b) over 15 °C and less than 25 °C, and (c) less than or equal to 15 °C the room temperature is. The process proceeds to input/output process step EX103 (wire W106) when it is discriminated that the room temperature is (a) greater than or equal to 25 °C, the process proceeds to discrimination process step QB101 (wire W 107) when it is discriminated that the room temperature is (b) over 15 °C and less than 25 °C, and the process proceeds to input/output process step EX104 (wire W 108) when it is discriminated that the room temperature is (c) less than or equal to 15 °C.

In the input/output process EX103, the agent processing unit 6 supplies data representing a quantity "Turning on a cooler is desired" to the speech synthesis processing unit 3, and supplies a control signal instructing start of a cooling operation to the air conditioner 51, and the process proceeds to discrimination process step CN103 (wire W110). The speech output unit 4 reproduces a speech which reads out a text represented by the data supplied in the input/output process step EX 103.

In the input/output process EX104, the agent processing unit 6 supplies data representing a text "Turning on a heater is desired" to the speech synthesis processing unit 3, and supplies a control signal instructing start of a heating operation to the air conditioner 51, and the process proceeds to discrimination process step CN103 (wire W112). The speech output unit 4 reproduces a speech which reads out a text represented by the data supplied in the input/output process step EX104.

In the discrimination process QB101, the agent processing unit 6 supplies data representing a text "Heating? Or Cooling?" to the speech synthesis processing unit 3, and stands by for word data representing a word "heating" or "cooling" to be supplied from the language analyzer 2. When word data representing a word "cooling" is supplied, the process proceeds to an input/output process EX103 (wire W109), and when word data representing a word "heating" is supplied, the process proceeds to an input/output process EX104 (wire W111).

In the discrimination process step CN103, the agent processing unit 6 acquires data indicating whether the window of the vehicle is open or not from the window opening/closing controller 52, and, based on this data, discriminates whether at least which one of the windows of the vehicle is open or not. When it is discriminated that the window is open, the process proceeds to an input/output process EX105 (wire W114), and data representing a speech which reads out "Window is to be closed" is supplied to the speech synthesis processing unit 3 at the input/output process EX105, and a control signal instructing closing of the open window is supplied to the window opening/closing controller 52. The speech output unit 4 reproduces a speech which reads out a text represented by the data supplied in the input/output process step EX105, and the window opening/closing controller 52 closes the open window. The agent processing unit 6 shifts the process to discrimination process QB103 (wire W115).

When it is discriminated that all windows of the vehicle is closed in the discrimination process step CN103, the agent processing unit 6 shifts the process to input/output process EX106 (wire W116). In the input/output process EX106, data representing a speech which reads out "Window is left as it is" is supplied to the speech synthesis processing unit 3, and the process proceeds to the discrimination process QB103 (wire W117). The speech output unit 4 reproduces a speech which reads out a text represented by the data supplied in the input/output process step EX106.

In the discrimination process step QB103, the agent processing unit 6 first supplies data representing a text "Which air conditioner level, high, low, or medium, is preferred?" to the speech synthesis processing unit 3. The speech output unit 4 reproduces a speech which reads out a text indicated by that data.

In the discrimination process step QB103, next, the agent processing unit 6 waits for data representing a word "high", "low" or "medium" to be supplied from the language analyzer 2, and when corresponding data is supplied, the agent processing unit discriminates which one of words "high", "low" or "medium" the data represents. The process proceeds to input/output process step EX107 (wire W118) when it is discriminated that a word "high" is represented, the process proceeds to input/output process step EX108 (wire W119) when it is discriminated that a word "medium" is represented, and the process proceeds to input/output process step EX109 (wire W120) when it is discriminated that a word "low" is represented.

In the input/output process step EX107, the agent processing unit 6 outputs a control signal instructing setting of the cooling or heating level to "high" to the air conditioner 51. Likewise, in the input/output processing step EX108, a control signal instructing setting to "medium" and a control signal instructing setting to "low" in the input/output processing step EX109 are output. The air conditioner 51 starts cooling or heating at a level indicated by the control signal supplied in the input/output process step EX107, EX108 or EX109.

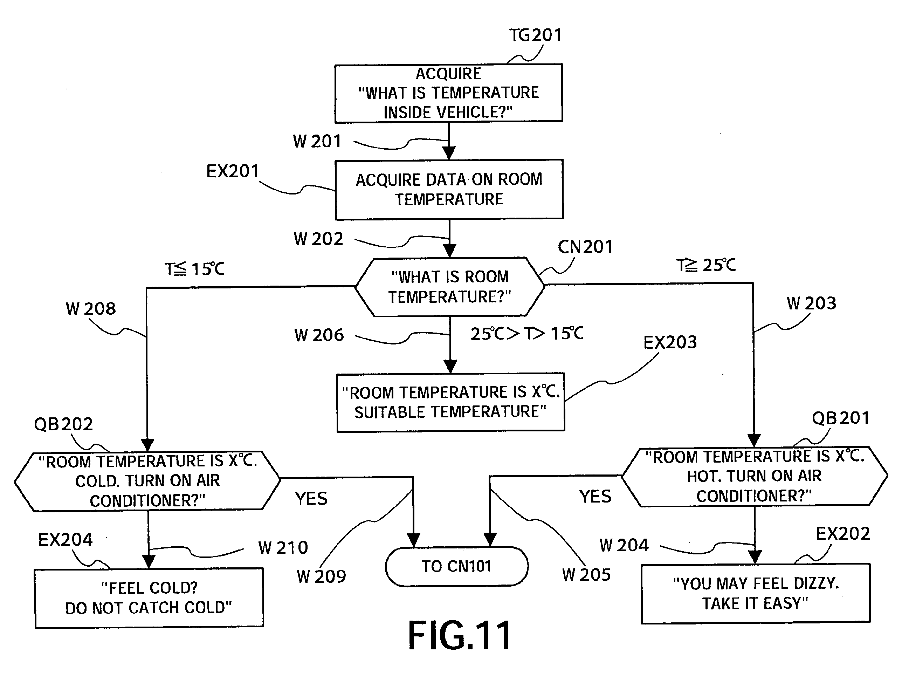

In the flow illustrated in FIG. 11, the agent processing unit 6 waits for word data, which indicates words like "What is a room temperature?" expressing a desire to know the room temperature, to be supplied from the language analyzer 2 in the trigger acquisition process step TG201, and when it is supplied, the process proceeds to input/output process step EX201 (wire W201).

In the input/output process EX201, the agent processing unit 6 acquires data indicating a current temperature from the temperature sensor 53, and the process proceeds to a discrimination process CN201 (wire W202). In the discrimination process step CN201, the agent processing unit 6 discriminates whether the room temperature is any of (a) greater than or equal to 25 °C, (b) over 15 °C and less than 25 °C, and (c) greater than 25 °C, as done in the aforementioned discrimination process step CN102. The process proceeds to discrimination process step QB102 (wire W203) when it is discriminated that the room temperature is (a) greater than or equal to 25 °C, the process proceeds to an input/output process step EX203 (wire W206) when it is discriminated that the room temperature is (b) over 15 °C and less than 25 °C, and the process proceeds to discrimination process step QB202 (wire W208) when it is discriminated that the room temperature is (c) less than or equal to 15°C.

In the discrimination process step QB201, when, for example, the room temperature is X °C, the agent processing unit 6 first generates data representing a text "Room temperature is X °C. It is hot. Turn on an air conditioner?", and supplies it to the speech synthesis processing unit 3. The speech output unit 4 reproduces a speech which reads out the text represented by that data.

In the discrimination process step QB201, next, the agent processing unit 6 waits for data representing a concept "affirmation" or "contradiction" to be supplied from the language analyzer 2, and when corresponding data is supplied, it is discriminated which one of the concepts "affirmation" and "contradiction" does the data represent by, for example, referring to the word database. When it is discriminated that the data represents "affrmation", the process proceeds to the discrimination process step CN102 in FIG 9 (wire W205), and when it is discriminated that the data represents "contradiction", the process proceeds to input/output process step EX202 (wire W204). In the input/output process step EX202, the agent processing unit 6 generates data representing a text "You may feel dizzy. Take it easy", and supplies it to the speech synthesis processing unit 3. The speech output unit 4 reproduces a speech which reads out the text represented by the data.

In the input/output process step EX203, when the room temperature is X [°C], the agent processing unit 6 generates data representing a text "The room temperature is X °C. It is a suitable temperature", and supplies it to the speech synthesis processing unit 3. The speech output unit 4 reproduces a speech which reads out the text represented by the data.

In the discrimination process step QB202, when the room temperature is X [°C], the agent processing unit 6 first generates data which represents a text "The room temperature is X °C. It is cold. Turning on air conditioner?", and supplies it to the speech synthesis processing unit 3. The speech output unit 4 reproduces a speech which reads out the text represented by that data.

In the discrimination process step QB202, next, the agent processing unit 6 waits for data representing a concept "affirmation" or "contradiction" to be supplied from the language analyzer 2, and when supplied with corresponding data, discriminates which one of the concepts "affirmation" and "contradiction" the data represents by referring to, for example, the word database. When it is discriminated that the data represents "affirmation", the process proceeds to discrimination process step CN102 in FIG 9 (wire W209), and when it is discriminated that the data represents "contradiction", the process proceeds to input/output process step EX204 (wire W210). In the input/output process step EX204, the agent processing unit 6 generates data representing a text "Feel cold? Do not catch a cold", and supplies it to the speech synthesis processing unit 3. The speech output unit 4 reproduces a speech which reads out the text represented by that data.

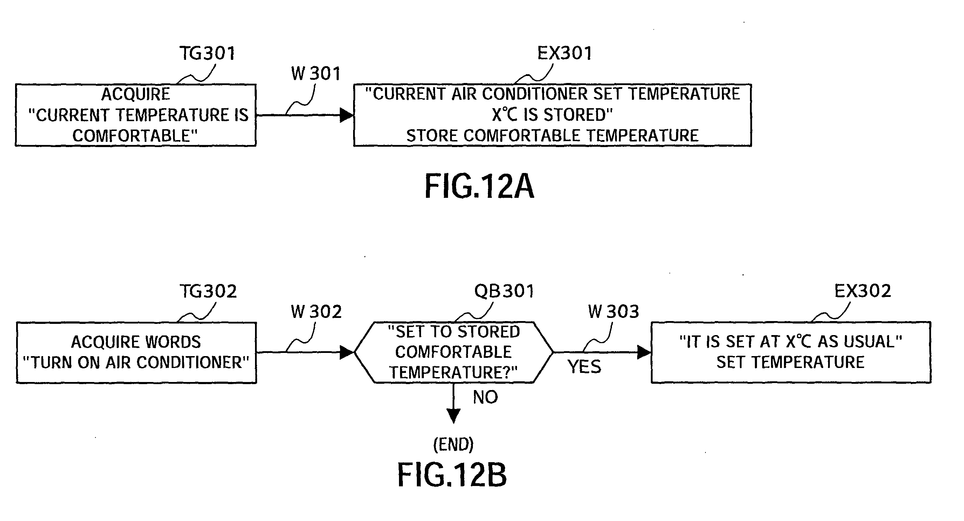

In the flow shown in FIG. 12A, the agent processing unit 6 waits for word data, which represents words "current temperature is comfortable" and from which a comfortable feeling can be recognizable, to be supplied from the language analyzer 2 in the trigger process step TG301, and when it is supplied, the process proceeds to input/output process step EX301 (wire W301). The agent processing unit 6 acquires data indicating a current room temperature from the temperature sensor 53, and stores this data in a local non-volatile memory or the like as data representing a comfortable temperature in the input/output process EX301.

The flow shown in FIG 12A is a flow when data representing comfortable feeling is stored, and in this flow, the agent processing unit 6 waits for word data representing words "turn on an air conditioner" to be supplied from the language analyzer 2 in the trigger process step TG302, and when it is supplied, the process proceeds to discrimination process step QB301 (wire W302).

In the discrimination process step QB301, the agent processing unit 6 first generates data representing a text "Set at a stored comfortable temperature?", and supplies it to the speech synthesis processing unit 3. The speech output unit 4 reproduces a speech which reads out the text represented by that data.

Subsequently, the agent processing unit 6 waits for data representing a concept "affirmation" or "contradiction" to be supplied from the language analyzer 2, and when supplied with corresponding data, discriminates which one of the concepts "affirmation" and "contradiction" the data represents. When it is discriminated that the data represents "affirmation", the process proceeds to input/output process step EX302 (wire W303).

In the input/output process step EX302, the agent processing unit 6 refers to a locally stored comfortable temperature and specifies the comfortable temperature, and supplies a control signal instructing temperature adjustment toward the comfortable temperature to the air conditioner 51. When it is discriminated that the word data supplied in the discrimination process step QB301 represents "contradiction", the agent processing unit 6 does not execute any particular process, and terminates the flow. The process may transition to the discrimination process step CN101 in FIG 9.

In a case where the language analyzer 2 supplies plural pieces of word data, for example, the agent processing unit 6 executes a plurality of discrimination processes in parallel. In this case, if there are a plurality of processes involving the same word as an input target (for example, data input in a trigger acquisition process or a discrimination process) and word data representing the corresponding word is supplied from the language analyzer 2, the agent processing unit 6 executes all of those processes in parallel. At this time, final discrimination that what word is input can be performed with the score S and weighting factor J indicated by the word data, which will be discussed later.

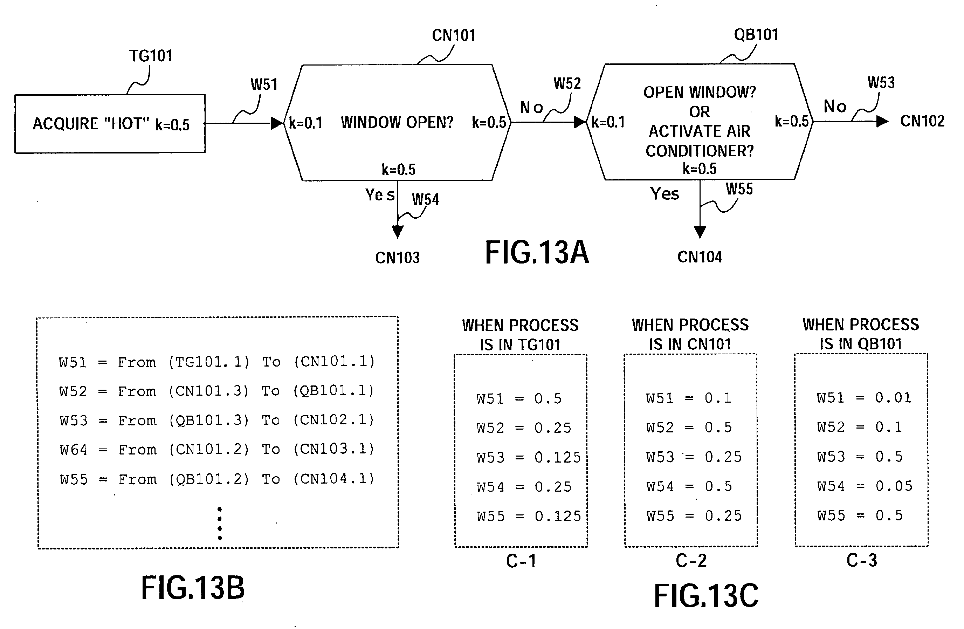

Next, a method of calculating the weighting factors J of the individual wires will be explained.
In a case where a plurality of process are linked together by wires W, the weighting factor J of a wire W of interest is obtained by sequentially multiplying transition constants k for progress direction determination over a transition path originating from a process currently in process to the wire W of interest.
To facilitate understanding, let us assume a process whose flow is shown in FIG 13A.
In this example, a wire W51 defines in such a way that a first preceding process (in this example, a trigger acquisition process TGxx) is executed and is transitioned to a following second process (in this example, a discrimination process CNxx), a wire W52 defines in such a way that the second process is executed and is transitioned to a following third process (in the example, QBxx), and a wire W53 defines in such a way that the third process is executed and is transitioned to a following process.
A transition constant k for determining the progress direction of each of the first to third process is all 0.5.
In this case, the wires are defined as shown in, for example, FIG 13B.

For example, when the process (or control) of the agent processing unit 6 reaches the first process, the agent processing unit 6 calculates the individual weighting factors J of wires W51 to W55 (all including non-illustrated wires if they are present) by sequentially multiplying transition constants k in the preceding direction over a transition path with the first process being a starting point, writes calculation results in the wire database D5 in association with the wires W51 to W55.

Specifically, when the first process is reached, the weighting factor J of the wire W51, for example, becomes the value of a transition constant k allocated to a node linked to the second process of the first process, i.e., 0.5. The weighting factor J of the wire W52 in the second process becomes equal to a result of multiplying a transition constant k = 0.5 associated with the wire W51 in the first process by a transition constant k = 0.5 allocated to a node linked to the wire W52 in the second process, i.e., 0.25.
The weighing factor J of the wire W53 becomes equal to a result of further multiplying a result of multiplication of the transition constant k = 0.5 of the wire 51 in the first process by the transition constant k = 0.5 of the wire W52 in the second process by a transition constant k = 0.5 of the wire W53, i.e., 0.125.

The weighing factors J of the individual wires with processes in progress being starting points are calculated in this manner. Accordingly, as a current status is transitioned, the weighing factors J of the individual wires are calculated on a case-by-case basis with a current process being a starting point.

Specifically, as the current status is transitioned to the second process, the weighting factor J of the wire W54 becomes a value 0.5 equal to the transition constant k of the wire W52 of the second process, and the weighting factor J of the wire W55 becomes equal to a result of multiplying the transition constant k =0.5 of the wire W52 of the second process by a transition constant k =0.5 of the wire W55 of the third process, i.e., 0.25. At this time, the agent processing unit 6 calculates the weighing factor J of the wire W51 in the reverse direction, i.e., the direction of returning to the first process, and writes it in the database. When transition to the second process is executed, if the transition constant k in a reverse direction of the wire W51 is 0.1, 0.1 directly becomes the weighting factor J of the wire W51. When transition to the third process is executed, the transition constant k = 0.1 in the reverse direction of the wire W52 further becomes the weighting factor J of the wire W52, directly. The weighting factor J of the wire W51 in a status transitioned to the third process becomes a value obtained by multiplying the weighing factor J (= transition constant k) 0.1 of the wire W52 in a status transitioned to the third process by a transition constant k = 0.1 in the reverse direction of the second process, i.e., 0.01.
Changes in the weighting factors J of the individual wires Wn are illustrated in FIG 13C.

Calculations of the weighting factors J are carried out not only for processes of the associated flow, but for all wires of the entire flows, and the calculated weighting factors J are set to the individual wires. A wire which is not associated with a current process may be allocated with a predetermined small coefficient. However, for a wire whose preceding process is a trigger acquisition process in particular, the transition constant k is set high to some extent. This ensures a jump to a conversation whose contents greatly differ from the contents of a conversation that has been made just before.
Conditions are set to the individual wires. Specifically, a word "hot" is set to W21 as a condition, and a word "window" is set to W25. When word data is supplied from the language analyzer 2, if the word data indicates the word "hot", a score S indicated by that word data is set to W21. If the word data supplied from the language analyzer 2 indicates the word "window", a score S indicated by that word data is set to W25.
The condition set to each wire is not limited to a case where a single word is set. For example, a plurality of words representing the same meaning may be set as conditions. Storing relationships among those words and the wires satisfies the setting of those conditions, and a word subject to score calculation is stored in the word database.
For example, when speech recognition is performed, the language analyzer 2 calculates the scores S of all words registered in the word database for input speech, generates word data, and outputs the word data to the agent processing unit 6. Next, the agent processing unit 6 discriminates with which wire each of the input word data is associated, and sets a score S indicated by the word data to each of the related wires. This enables calculation of scores S of the input speech signal and word at one time even if the same word is set to a plurality of wires as a condition. The obtained scores S of the individual words are set to the individual associated wires. Plural scores may be obtained for a single wire, but in this case, for example, the largest score S may be selected.
Accordingly, if individual pieces of word data all representing the same meaning, such as "yes", "sure", "right", and the like are set to a single wire, an appropriate result as the score of speech recognition can be gained even if the user gives an instruction in any one of speeches "yes", "sure", and "right".
In some discrimination processes, information from the input/output target group 5 may be obtained as input information. In this case, data indicating the status of the individual devices of the input/output target group 5 is managed as a status database (corresponding to the aforementioned "word database"), and it is determined what status and which device the input information indicates by referring to the status database, and that and a score S are output to the agent processing unit 6 as status data. Unlike in the case of speech recognition, if a corresponding status is in the status database, a score S always becomes 100%. The agent processing unit 6 determines a wire relating to a status indicated by the status data, and sets a score S to each wire.

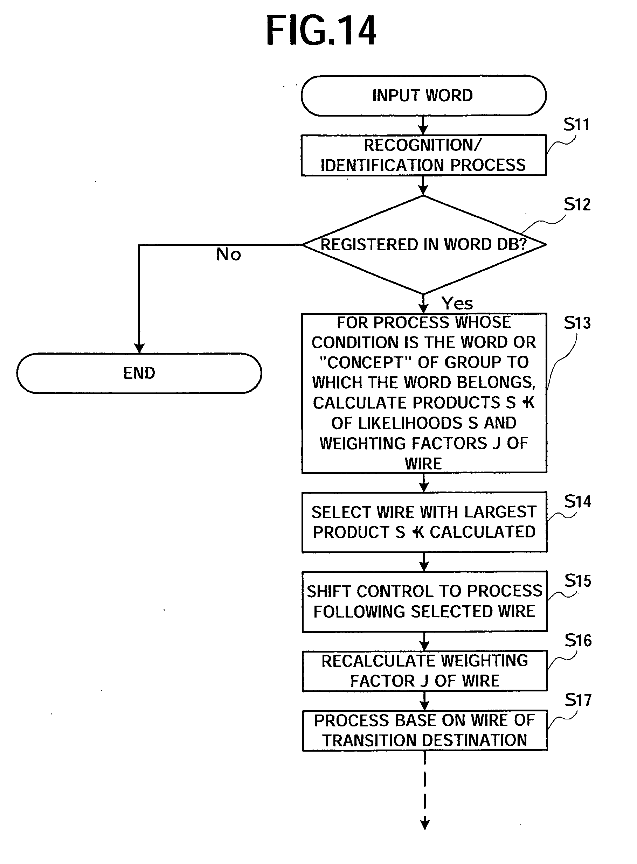

Next, the operation of the entire system structured in this manner will be explained with reference to FIG 14.
The speech input unit 1 and the language analyzer 2 individually operate, capture a speech, analyze it, and provide the agent processing unit 6 with word data.
When (one or plural pieces of) word data associated with discrimination conditions are supplied from the language analyzer 2, the agent processing unit 6 executes the following processes.
A supplied word is recognized (identified) (step S11), and it is discriminated whether or not the word corresponds to a word registered in the word database DB4 (step S12). If it is not registered (step S12, No), a word inputting process is terminated.
If it is registered (step S12, Yes), on the other hand, the product S.J of the likelihood S of the word and the weighting factor J of the wire is calculated with respect to a process whose condition is the "concept" of the word or the group to which the word belongs (step S13).
For example, suppose that the process pointer PP indicates the second process in a case where the flow illustrated in FIG 13A is being executed. The weighting factors J of the individual wires in this case are as illustrated in FIG. 13C.
Suppose that in this status, word data indicating a word "hot" with a score of 80% and a word "window" with a score of 50% are input.
In the example illustrated in FIGS. 13A and B, the word "hot" relates to a discrimination condition in the first process, and the word "window" relates to a discrimination condition in the third process.
As illustrated in FIG 13(c-1), the weighting factor J of the wire W51 whose preceding process is a process of inputting the word data indicating the word "hot" is 0.5, and the weighting factor J of the wire W53 whose preceding process is a process of inputting the word data indicating the word "window" is 0.125. In this case, the products S·J of the likelihoods S determined for the wires W51 and W53 and the weighting factors J are as indicated by equations 1 and 2.

(Equation 1) Product S.J regarding wire W51: score S (=80%) for "hot" x weighting factor J (= 0.5) of wire W51 = 40

(Equation 2) Product S.J regarding wire W53: score S (=50%) for "window" x weighting factor J (= 0.125) of wire W53 = 6.25

The agent processing unit 6 carries out the above-described processes of determining the products S·J of scores S and weighting factors J for all the wires the flow has.
Subsequently, the agent controlling unit 6 selects wire with the largest calculated product S·J (step S14 in FIG 14). The agent controlling unit 6 shifts control to a process following the selected wire (step S 15). For example, when the product S·J acquired for the wire W51 represents the largest value, the input word data is recognized as representing the word "hot", and transition takes place to the second process which is the process following the wire W51. Normally, with a process currently in process being taken as a starting point, the weighting factor J of the wire currently in process is relatively large. Accordingly, the process generally shifts to the next process, but in a case where a word which quite differs from a previous one and has a large likelihood S is input, a process corresponding to that word may start because of the relationship with the weighting factor J.

When the process transitions, the agent processing unit 6 recalculates the weighting factors J of the individual wires based on the status after transition (step S16).
Afterward, the process is carried out in accordance with the contents of the process (step S17). In this example, the second process is executed. That is, the agent processing unit 6 captures information on opening/closing of a window from the window opening/closing controller 52, determines the product S·J of the likelihood S for the wire W52 and the weighting factor J based on the captured information, determines the product S·J of the likelihood S for the wire W54 and the weighting factor J, selects any wire, and executes a process following the selected wire.

For a signal indicating opening/closing of the window from the window opening/closing controller 52, the likelihood of opening may be 100% or 0%, the likelihood of closing may be 0% or 100%. They may be changed in accordance with the level of opening. When there is an input/output process EXxx during the process and the agent processing unit 6 executes this process and outputs speech data, it is generated as a speech.
When a process of controlling the air conditioner and the window opening/closing controller 52, like an input/output process EX01, is executed during the process, the air conditioner 51 and the window opening/closing controller 52 are controlled in accordance with the contents of the process.

Although the discrimination process based on a "word" has mainly been explained referring to FIG 8 and FIG. 9, the same is true of the discrimination process based on a concept as shown in FIG 14. A wire from a trigger acquisition process based on a word or a concept is subject to discrimination. A somewhat large transition constant k may be set for transition from a trigger acquisition process. Specifically, a weighting factor 0.8 or the like is given to, for example, the wires in FIG 8, i.e., transitions from a trigger acquisition process TG101 of acquiring word data representing words "turn on an air conditioner" in the flow in FIG. 9. Then, in a case where the process of the agent processing unit 6 is associated with a trigger acquisition process TG101, for example, as the user pronounces "turn on an air conditioner" and word data whose score for the words "turn on an air conditioner", for example, is 90% is obtained, the product S.J of the score S and the weighting factor J (= transition constant k) of the wire W101 associated with "determination on whether or not the user have said "Turn on an air conditioner"" is 90% × 0.8, i.e., 72. If the value is a large value that cannot be obtained by other wires, an input speech is recognized as "turn on an air conditioner", and the probability that the process of the agent processing unit 6 jumps to an input/output process EX03 becomes higher. If the weighting factors J of the other wires are set extremely small, the probability of occurrence of transitions defined by the other wires becomes extremely low, resulting in that the control process is carried out with a recognition rate being improved along the flow of a conversation expected to some extent.

In the embodiment, transition in the reverse direction may occur. However, it is often undesirable to reverse a conversation in practice. Accordingly, a reverse-direction transition constant k should be set to a smaller value than a preceding-direction transition constant k. Then, even if word data with a high score S is obtained from an input speech, a product S·J acquired for a wire whose reverse-direction transition constant k is written as a weighting factor J becomes a small value, so that the possibility of transition in the reverse direction can be suppressed at low.
The agent processing unit 6 may treat a process in which the value of the acquired product S.J does not meet a predetermined condition (a process in which the value of a product S.J does not reach a predetermined value) in such a way that the process is excluded from transition execution targets.

As illustrated in, for example, FIG 8, a wire defines transition in the form of from a process item to a process item. As a wire is described in the form as illustrated in FIG. 8 and stored in the wire database D5, it is possible to define relationships among the individual process items as if they were macro processes of a computer. This can facilitate connection of the individual process items.

Because a process item to be a trigger actually becomes discrimination of the score S of a word or the like to be recognized (may be an input from the other input target group) associated with a wire to be connected, a trigger process item in the wire is not defined as the starting point of the wire, but the wire itself is defined as the origin of transition.

Further, as the connection relationships among the individual process items are defined by wires as mentioned above, wires can be easily added. In a case where the user frequently inputs a speech "find a family restaurant" with an intention to take a rest after a speech "hot" is input, for example, a wire is automatically added with respect to the search process item of a family restaurant. Then, after the wire is automatically added, it becomes possible to appropriately cope with the input "find a family restaurant" by increasing the weighting factor J of a wire connected to a family restaurant search process item to some extent (in this case, however, the agent processing unit 6 shall store map data or the like including, for example, information representing the location of a family restaurant, or access external map data or the like).
The automatic addition of a wire may be automatically carried out when the number of jumps from one process item to another is counted and reaches a predetermined number.

The aforementioned vehicular air conditioning system arbitrarily uses the relationship between a wire and a process item as explained above, a condition set to a wire, and a weighting factor (the same is true of a transition constant k) with respect to the flowchart illustrated in FIGS. 9 to 12.
Accordingly, if data and a wire representing the contents of a process are described appropriately, the above-described vehicular air conditioning system according to the invention need not completely specify a device to be controlled and the contents of control to be added, but can respond to a language spoken by the user, assume the request of the user from the language, appropriately determine what control should be applied to which device, and apply control according to the result of the discrimination to a device.
The flowchart shown in FIG 9 will be explained in more detail based on the aforementioned relationship between a wire and a process item, condition set to a wire, weighting factor J and transition constant k. As explained above, words "turn on an air conditioner" are defined for the wire W101, and when a calculated weighting factor J is "0.5", if the user pronounces ''turn on an air conditioner", and a score S to words "turn on an air conditioner" defined for the wire W101 is 90%, the product S·J of the score S and the weighting factor J of the wire W101 becomes equal to 90% × 0.5, i.e., 45. If this value is a larger value than the value of multiplication of a score S calculated at the other wire by a weighting factor J, an input speech will be recognized as "turn on an air conditioner". When the input speech is recognized as "turn on an air conditioner", the process step proceeds to CN101 as the wire W101 is defined in such a way that a status transitions to the process step CN101. As the status transitions, i.e., the process step proceeds to CN101 from TG101, a weighting facor J is calculated again at this time. When both of the transition constant k of the wire W102 and the transition constant k of the wire W104 are "0.5", both weighting factors J of the wire W102 and wire W104 obtain a calculation result of "0.5", and at the same time, the weighting factor J of a wire of the following step is calculated. For example, when transition constants k of the wires W106, 107, and 108 of the following step CN102 are "0.5", the weighting factors J of the wires 106, 107, and 108 are calculated by multiplication by the transition constants k set to the wires of the process step CN101, and in this case, weighting factors J of "0.25" resulting from "0.5 x 0.5" are set to the individual wires 106, 107, and 108. Likewise, for the weighting factors J of the following wires W109, 111, individual transition constants k of wires of the process steps CN101, CN102, and QB101 are multiplied, and when transition constants k set to the wires W109, W 111 are both "0.5", the weighting factors J of "0.125" are set to the wires W109, W111 by 0.5 × 0.5 × 0.5.
When the status transitions to the process step 101 as mentioned above and the weighting factors J of the individual wires are calculated, the air conditioner 51 is requested to,output data indicating the status of the air conditioner, the data indicating the status of the air conditioner 51 obtained by that from the air conditioner 51 is detected, and supplied to the individual wire W102, wire W104 and all other wires. The "ON" status of the air conditioner is defined for the wire W102, and the "OFF" status of the air conditioner is defined for the wire W104. Accordingly, when the status data of the air conditioner indicates "ON", a score S of 100% to status data "ON" defined for the wire W102 is obtained, and a score S to status data "OFF" defined for the wire W104 becomes 0%. Those scores are multiplied with respective weighting factors, and values of "50" to the wire W102 and "0" to the wire W104 are respectively obtained. Accordingly, when the obtained values are larger than values obtained for other wires, the wire W102 is selected, and the status transitions to the process step EX101. When the status data of the air conditioner indicates "OFF", on the other hand, a score S of 0% to status data "ON" defined for the wire W102 is obtained, and a score S to status data "OFF" defined for the wire W104 becomes 100%. Those scores are multiplied by respective weighting factors J, and the values of "0" to the wire W102, and "50" to the wire W 104 are respectively obtained. Accordingly, when the obtained values are larger than values obtained for other wires, the wire W104 is selected, and the status transitions to the process step EX101. That is, in the aforementioned cases, multiplication of the scores S of data obtained for all wires other than the wires W102, 104 (maybe scores S obtained by speech recognition, or status data obtained from other devices) and weighting factors J set to the individual wires are performed even if the process step transitions to either way, and a wire for which the largest value is obtained is selected. Therefore, from a relationship between the obtained score S and the weighting factor J of a wire at that point, a status transition from the other process step not connected by the wire becomes possible. According to the aforementioned example, when the user performs speech input "turn on an air conditioner", for example, the scores S of data obtained not only for the wire W101, but also for all the wires, such as wires W102, 104, 106, 107, 108, 109, 111, and weighting factors J calculated with respect to the individual wires are multiplied, and when the status transitions to the process step CN101, the scores S of conditions set to the individual wires with respect to data obtained not only for the wires W102, 104, but also for all the wires W101, 106, 107, 108, 109, 111, and the weighting factors J of the individual wires at that point are multiplied.
Likewise, every time the status transitions, the weighting factors J of the individual wires are calculated from the relationship between the process step currently in transition and the transition constant k, multiplications of the scores S of conditions defined for the individual wires (maybe words by speech recognition, or status data obtained from other devices) and calculated weighting factors J are performed for all wires from the obtained data, a wire for which the largest value is obtained is selected, and the status transitions to a process step defined by the wire.

The structure of the vehicular air conditioning system is not limited to the above-described one.
For example, devices belonging to the input/output target device group 5 should not necessarily be devices which bring about a result directly satisfying the user's demand, and may comprise, for example, a device (for example, a display apparatus like a liquid crystal display) that controls an external display apparatus or the like which outputs a message for prompting the user to take a specific action.

The word database may store not only data representing a word, but also data representing a phrase of plural words, as an element of the word database, or may store data representing a part of a word or a phoneme, as an element of the word database. A word or the like should not necessarily be grouped under a specific concept, and even in a case where grouping is done, data to be used for carrying out grouping may not take the form of a set of flags.

The agent processing unit 6 may change the transition constant k corresponding to a wire in accordance with a predetermined rule based on the number of times a transition represented by the wire has been executed, and rewrite the wire so that the weighting factor J becomes a calculated value based on the changed transition constant k.
Specifically, for example, the wire database stores the number of executions of a transition represented by each wire, with respect to that wire. The agent processing unit 6 rewrites the value of the number every time the transition is executed, thereby incrementing the value of the number by 1, and rewrites the transition constant k corresponding to each wire to a value which is proportional to, for example, the number stored for the wire. In the aforementioned embodiment, the condition set to the wire has been explained as to be set for each wire, but not limited to this. For example, the conditions of the individual wires may be described in the discrimination process. In this case, it is specified beforehand what wire each condition corresponds to.

The agent processing unit 6 may change data to be output in a discrimination process and an input/output process in accordance with data passed to those processes, data input through those processes, and other optional conditions.

The vehicular air conditioning system may have a display apparatus (for example, a liquid crystal display or the like) for outputting an image under the control of the agent processing unit 6, and the agent processing unit 6 may control the display apparatus in such a way that it displays a predetermined image for each process in the input/output process and the discrimination process.

The agent processing unit 6 may collectively acquire plural pieces of word data continuously spoken or the like in one input process and one discrimination process. The agent processing unit 6 may specify under what concept the plural pieces of word data collectively acquired are grouped to the same group, and use a part of or all of the acquired word data for use in a process only if the specified concept matches with the predetermined concept.

The agent processing unit 6 may comprise a plurality of data processing units (e.g., computers or the like) which are connected to one another and bear a flow formed generally by various processes, such as a trigger acquisition process, a discrimination process, and an input/output process, and wires. In this case, it is sufficient that each data processing unit which constitutes the agent processing unit 6 stores data representing that portion in the overall flow executable by the agent processing unit 6 which is probably executed by the unit, as elements of the process item database D4 or the wire database D5. If data to be stored by each data processing unit is such data which macro-defines that process which is executed by the data processing unit, it is easy to cause the plurality of data processing units to perform distributed processing.

The vehicular air conditioning system may plurally include the speech input unit 1, and the language analyzer 2 or the speech output unit 4.
The speech input unit 1 may have a recording medium drive unit (e.g., a floppy (registered trademark) disk drive, a CD-ROM drive or an MO drive) which reads a waveform signal from a recording medium (e.g., a floppy (registered trademark) disk, a CD (Compact Disc), an MO (Magneto-Optical Disk)) where data representing speeches is recorded, and supplies the signal to the language analyzer 2.

The agent processing unit 6 may run a simulation for predicting a future temperature transition or the like based on a current temperature inside the vehicle, a targeted temperature set to the air conditioner 51 and the like, and acquire data representing a simulation result. Based on the simulation result and an actual measurement of the temperature inside the vehicle acquired after the simulation has started, it is determined whether or not a predetermined message which prompts the user to execute air conditioning by a scheme different from an air conditioning currently in execution (e.g., message which proposes adjustment of an air volume) is to be generated, when it is determined that the message is to be generated, data representing the text of that message is supplied to the speech synthesis processing unit 3 for example, thereby generating the message. In this case, alternatively, the agent processing unit 6 may control a device belonging to the input/output target device group 5 in such a way that it performs air conditioning different from an air conditioning currently in execution.

A device control device according to the invention whose embodiment has been explained above can be realized not only by an exclusive system but also an ordinary computer system.
For example, The vehicular air conditioning system that executes the above-described processes can be constructed by installing a program for executing the operations of the speech input unit 1, the language analyzer 2, the speech synthesis processing unit 3, the speech output unit 4 and the agent processing unit 6 into a personal computer connected to the input/output target device group 5 from a recording medium where the program is stored. The personal computer that executes the program executes flows shown in, for example, FIGS. 9 to 12 as processes equivalent to the operation of the vehicular air conditioning system in FIG. 1.

The program that allows a personal computer to perform the functions of the vehicular air conditioning system may be uploaded to, for example, a bulletin board system (BBS) of a communication line, and distributed via the communication line, or a carrier may be modulated with a signal representing the program, the acquired modulated wave may be transmitted, and a device which receives the modulated wave demodulates the modulated wave to restore the program. Then, the above-deseribed processes can be executed by invoking the program, and running the program like other application programs under the control of the OS.

When the OS bears a part of the processes, or the OS constitutes a part of a single constituting element of the invention, a program excluding that part may be stored in a recording medium. In this case, it is also assumed that according to the invention, a program for executing the individual functions or steps to be executed by the computer is stored in the recording medium.

### Industrial Applicability

The invention can be used for various device control devices or the like which can control a device adequately in response to an instruction uttered in the form of a language by a human being.

## Claims

1. An air conditioner control device (6) which controls an air conditioner (51) in accordance with a speech-based instruction, comprising:
means (6) which detects an operational status of an external device (5) including said air conditioner (51) in response to input of said speech-based instruction; and
means (6) which controls not only said air conditioner (51) but also devices (52, 53, 54, and 55) other than said air conditioner device in such a way that a condition desired by an utterer of said speech is obtained based on an operational status detected by said operational status detection means.

2. An air conditioner control device (6) which controls an air conditioner (51) in accordance with a speech-based instruction, comprising:
means (6) which detects operational statuses of said air conditioner (51) and a window in response to input of said speech-based instruction; and
means (6) which controls not only said air conditioner (51) but also an operation of closing said window in such a way that a condition desired by an utterer of said speech is obtained when an operational status detected by said operational status detection means indicates that the window is open.

3. An air conditioner control device comprising:
speech recognition means (2) which acquires speech data representing a speech, and specifies a candidate of a phrase represented by said speech by performing speech recognition on said speech data; and
air conditioner control means (6) which specifies a variable to be changed for obtaining a condition desired by an utterer of said speech and/or a direction in which said variable should change, based on a candidate specified by said speech recognition means (2), environmental data indicating a condition of an environment under which a conditioning by an external air conditioner (51) is performed and/or operational status data indicating an operational status of said air conditioner (51), and controls said air conditioner (51) in such a way that a specified variable changes in a specified direction.

4. The air conditioner control device according to claim 3, wherein said air conditioner control means (6) further controls devices (52, 53, 54, and 55) other than said air conditioner (51),
specifies a device (5) to be controlled to change a variable to be changed for obtaining a condition desired by an utterer of said speech based on a candidate specified by said speech recognition means (2), said environmental data, and/or said operational status data, and controls a specified device (5) in such a way that a specified variable changes in a specified direction.

5. The air conditioner control device according to claim 3 or 4, wherein said air conditioner control means (6) has:
means (6) which discriminates whether or not the utterer of said speech feels comfortable with a current condition based on a candidate specified by said speech recognition means (2), and stores a condition indicated by environmental data to be supplied at a time when it is discriminated that the utterer feels comfortable; and
means (6) which discriminates whether or not the utterer of said speech desires to obtain a condition with which the utterer felt comfortable in the past based on a candidate specified by said speech recognition means (2), and upon determination that the utterer desires, refers locally stored past environmental data, specifies a variable to be changed for obtaining a condition indicated by the referred past environmental data and/or a direction in which said variable should change, and controls said air conditioner (51) in such a way that a specified variable changes in a specified direction.

6. An air conditioner control apparatus comprising:
air conditioner control means (6) which specifies a variable to be changed to obtain a desired condition and/or a direction in which said variable should change, and controls an external device (5) including an air conditioner (51) in such a way that a specified variable changes in a specified direction; and
simulation means (6) which executes a simulation regarding a shift of a condition under a control being executed by said air conditioner control means (6),
wherein said air conditioner control means (6) discriminates whether a conditioning method should be changed or not based on a result of said simulation and environmental data indicating a condition of an environment under which a conditioning by said air conditioner (51) is performed, and upon discrimination that it should be changed, outputs a message urging a change of the conditioning method or changes a mode of a control of said device (5).

7. An air conditioner control method of an air conditioner control device (6) which controls an air conditioner (51) in accordance with a speech-based instruction, comprising:
a step of detecting an operational status of an external device (5) including said air conditioner (51) in response to input of said speech-based instruction; and
a step of controlling devices (52, 53, 54, and 55) other than said air conditioner device as well as said air conditioner (51) in such a way that a condition desired by an utterer of said speech is obtained based on an operational status detected by said operational status detection means.

8. An air conditioner control method comprising:
a speech recognition step of acquiring speech data representing a speech, and specifying a candidate of a phrase represented by said speech by performing speech recognition on said speech data; and
an air conditioner control step of specifying a variable to be changed for obtaining a condition desired by an utterer of said speech and/or a direction in which said variable should change, based on a candidate specified by said speech recognition step, environmental data indicating a condition of an environment under which a conditioning by an external air conditioner (51) is performed and/or operational status data indicating an operational status of said air conditioner (51), and controlling said air conditioner (51) in such a way that a specified variable changes in a specified direction.

9. An air conditioner control method comprising:
an air conditioner control step of specifying a variable to be changed to obtain a desired condition and/or a direction in which said variable should change, and controlling an external device (5) including an air conditioner (51) in such a way that a specified variable changes in a specified direction; and
a simulation step of executing a simulation regarding a shift of a condition under a control being executed by said air conditioner control means,
wherein in said air conditioner control step, it is discriminated whether a conditioning method should be changed or not based on a result of said simulation and environmental data indicating a condition of an environment under which a conditioning by said air conditioner (51) is performed, and when it is discriminated that the conditioning method should be changed, a message urging a change of the conditioning method is output, or a mode of a control of said device (5) is changed.
